(19) Europäisches Patentamt

European Patent Office

Office européen des brevets

(11) EP 0 453 600 B1

(12) EUROPÄISCHE PATENTSCHRIFT

(45) Veröffentlichungstag und Bekanntmachung des Hinweises auf die Patenterteilung:
26.02.1997 Patentblatt 1997/09

(51) Int Cl.⁶: **G06F 7/50**

(21) Anmeldenummer: 90107878.2

(22) Anmeldetag: 25.04.1990

(54) **Paralleladdierwerk**

Parallel adder

Additionneur parallèle

(84) Benannte Vertragsstaaten:
**DE FR GB IT NL**

(43) Veröffentlichungstag der Anmeldung:
30.10.1991 Patentblatt 1991/44

(73) Patentinhaber: **Deutsche ITT Industries GmbH**
**79108 Freiburg (DE)**

(72) Erfinder: **Ullrich, Manfred, Dipl.-Ing. (FH)**
**D-7819 Denzlingen (DE)**

(56) Entgegenhaltungen:
**DE-A- 3 540 800**        **US-A- 4 910 700**

- **PROCEEDINGS OF THE IEEE 1986 CUSTOM INTEGRATED CIRCUITS CONFERENCE, Rochester, New York, 12. - 15. Mai 1986, Seiten 236-239, IEEE, New York, US; C.M. LEE et al.: "Zipper CMOS"**
- **IEEE INTERNATIONAL ELECTRON DEVICES MEETING, TECHNICAL DIGEST, Washington, 6.- 8. Dezember 1976, Seiten 21-26, IEEE, New York, US; R.A. ALLEN et al.: "Charge coupled devices in digital LSI"**
- **PATENT ABSTRACTS OF JAPAN, Band 7, Nr. 82 (P-189)[1227], 6. April 1983; & JP-A- 58 10 241**

**Beschreibung**

Die Erfindung betrifft ein Paralleladdierwerk mit Übertrag zwischen benachbarten Addierstufen, wobei jede Addierstufe zwei Eingangsdatenanschlüsse und eine Übertragbildungsschaltung mit einem Eingangsübertraganschluß und einem Ausgangsübertraganschluß aufweist, die aus von der Addierstufe zu addierenden Eingangsdatensignalen und einem ihr zugeführten Eingangsübertragssignal ein Ausgangsübertragsignal erzeugt.

In der modernen Rechnertechnik werden zur schnellen Signalverarbeitung arithmetische-logische Einheiten (ALUs) benötigt, die Addierwerke enthalten, welche in der Lage sind, Additionen durchzuführen, welche die Grundlage auch der restlichen Rechenoperationen bilden.

Die Aufgabe solcher Rechenwerke besteht darin, Datenwörter mit einer Länge von N Bit zu addieren, wobei bei der Berechnung des jeweils höherwertigen Bits der Übertrag der je vorausgehenden Stufe berücksichtigt wird.

Neben seriellen und daher langsamen Addierwerken, bei denen pro Arbeitstakt nur eine Stelle des N-Bit-Datenwortes unter Berücksichtigung des Übertrags abgearbeitet wird, sind Paralleladdierwerke bekannt, die schneller sind und deshalb in ALUs von Prozessoren eingesetzt werden.

Eine schnelle parallele Additionsmethode ist unter dem Namen "Addition mit vorbestimmten Übertrag" bekannt, die nach der Ausdrucksweise im englischen Sprachraum auch unter "Addition mit Carry-Look-Ahead" bekannt ist. Hierbei werden durch eine umfangreiche Logik zunächst alle Überträge bestimmt und erst danach werden die Summen gebildet. Mit steigender Bitzahl pro Datenwort wird zum Bestimmen der Überträge eine solch umfangreiche Logik benötigt, daß der Aufbau unwirtschaftlich wird.

Ein Paralleladdierwerk, das keine derart umfangreiche Logik benötigt, ist das sogenannte "Addierwerk mit geschlungenem Übertrag", für das aus dem englischen Sprachraum auch der Begriff "Ripple Carry" bekannt ist.

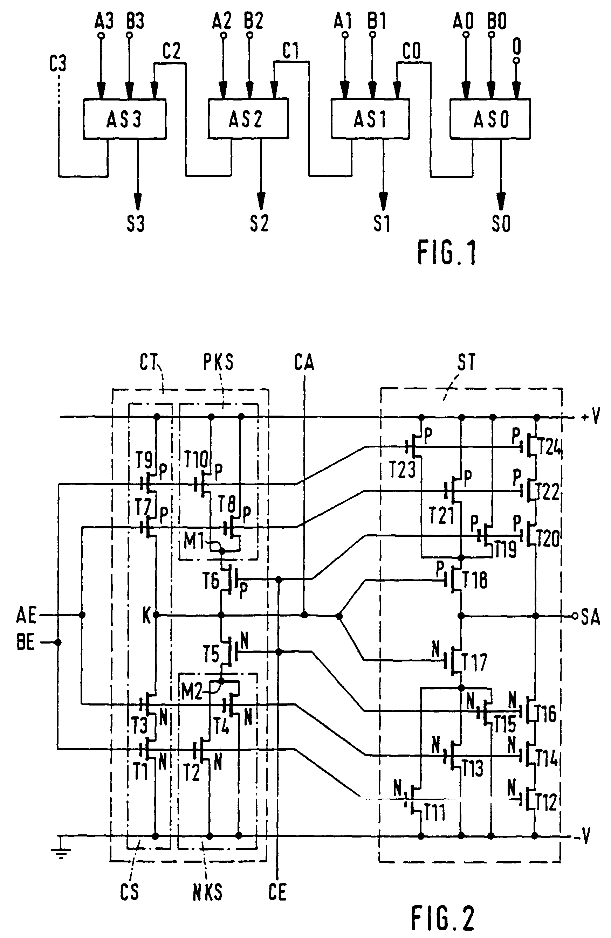

Die vorliegende Erfindung befaßt sich mit einem derartigen Addierwerk, dessen grundsätzlicher Aufbau in Fig. 1 gezeigt ist. Ein solches Paralleladdierwerk weist eine bestimmte, der Bit-Zahl der Datenwörter entsprechende Anzahl von Addierstufen auf, denen je zwei Eingangsdatensignale und ein Übertragsignal zugeführt werden, aus denen sie je eine Summe bilden, gegebenenfalls unter Erzeugung eines an die nächstfolgende Addierstufe weiterzugebenden Übertragsignals. Dabei entsprechen die beiden Eingangsdatensignale den Binärwerten mit derjenigen Wertigkeit innerhalb der zu addierenden Datenwörter, welche der jeweiligen Addierstufe zugeordnet ist. Eine bestimmte Addierstufe kann ihren Rechenvorgang erst dann durchführen, wenn ihr von der je vorausgehenden Addierstufe deren Übertragsignal angeliefert wird. Daher vergeht eine entsprechende Zeit, bis das Gesamtrechenergebnis des Paralleladdierwerks vorliegt.

Der Erfindung liegt die Aufgabe zugrunde, bei einem Paralleladdierwerk mit geschlungenem Übertrag die Gesamtrechenzeit zu verkürzen.

Der Erfindung liegt die Erkenntnis zugrunde, daß bei einem Paralleladdierwerk mit geschlungenem Übertrag die Gesamtrechenzeit überwiegend durch den Zeitbedarf für die Übertragbildung bestimmt wird. Für die Gesamtrechenzeit Tt gilt folgende Beziehung:

$$Tt = Ts + (n-1)\ Tc$$

Dabei bedeuten:

Tt = Zeitdauer bis zum Vorliegen des Gesamtrechenergebnisses am Ausgang des Paralleladdierwerks;

Ts = Zeitdauer, welche die höchstwertige Addierstufe benötigt um ihre Summe zu bilden;

Tc = Zeitdauer für die Bildung des Übertrags innerhalb einer Addierstufe.

Die obige Beziehung zeigt, daß bei der Gesamtrechenzeit die Übertragbildungszeit Tc proportional zur Anzahl der Addierstufen des Paralleladdierwerks eingeht. Durch Verkleinern der Zeit Tc ließe sich daher die Gesamtrechenzeit des Paralleladdierwerks stark verkürzen.

Für moderne Rechner setzt man vorzugsweise die CMOS-Technologie ein. Diese Technologie wird insbesondere bevorzugt, weil der Leistungsbedarf einer CMOS-Stufe praktisch auf die Umschaltvorgänge beschränkt ist. Außerhalb der Umschaltvorgänge fließt praktisch kein Strom und es entsteht somit praktisch keine Verlustleistung.

Bei jedem Umschaltvorgang müssen von der Schaltsignalquelle die Eingangskapazitäten der an der CMOS-Stufe beteiligten Transistoren umgeladen werden. Die Schaltsignalquelle wird im Fall eines Paralleladdierwerks durch den Übertragausgang der je vorausgehenden Addierstufe gebildet.

Ein grundlegender Gedanke der vorliegenden Erfindung besteht nun darin, die Schaltungsteile einer jeden Addierstufe, die an der Übertragbildung dieser Addierstufe beteiligt sind, mit weniger Transistoren auszubilden, um die Gesamt-Eingangskapazität zu verringern, welche von dem Übertragausgang der vorausgehenden Addierstufe umgeladen werden muß.

Aus dieser Grundidee ist die erfindungsgemäße Maßnahme entstanden, denjenigen Anteil des für die Übertragbildung zuständigen Schaltungsteils, welcher für die Verarbeitung des von der vorausgehenden Addierstufe kommenden Übertragssignals zuständig ist, abweichend von den restlichen Schaltungsteilen der Addierstufe nicht in Komplementärtechnik sondern mit Transistoren nur des einen Leitfähigkeitstyps aufzubauen. Diese Maßnahme hat allerdings zur Folge, daß die Übertragbildungsschaltung der Addierstufe von dem Übertragsignal der vorausgehenden Addierstufe nur noch in einer Schaltrichtung umgeschaltet werden kann. Dieses Problem wird erfindungsgemäß dadurch überwunden, daß die Übertragbildungsschaltung einer jeden Addierstufe vor der eigentlichen Rechenphase dieser Addierstufe in einer sogenannten Voreinstellphase in denjenigen Schaltungszustand gebracht wird, in welchen sie von dem Übertragsignal der vorausgehenden Addierstufe nicht geschaltet werden kann. Führt das zugeführte Übertragsignal im Zusammenwirken mit den der Addierstufe zugeführten Eingangsdatensignalen zu einem Ausgangsübertrag, welcher dem voreingestellten Schaltzustand entspricht, wird dieser Schaltzustand einfach beibehalten, ansonsten wird in den anderen Schaltzustand umgeschaltet.

Die vorausgehenden Überlegungen sind nicht auf Addierwerke in CMOS-Technik beschränkt sondern gelten entsprechend auch für andere Technologien, beispielsweise Gegentakt-Bipolarschaltungen, wo bei Schaltvorgängen die durch Sperrschichten gebildeten Eingangskapazitäten umgeladen werden müssen.

Die Erfindung besteht gemäß Patentanspruch 1 in einem Paralleladdierwerk mit Übertrag zwischen benachbarten Addierstufen AS0-AS3, wobei jede Addierstufe zwei Eingangsdatenanschlüsse AE', BE' und eine Übertragbildungsschaltung CT mit einem Eingangsübertraganschluß CE und einem Ausgangsübertraganschluß CA aufweist, die aus von der Addierstufe zu addierenden Eingangsdatensignalen A0, B0..... A3, B3 und einem ihr zugeführten Eingangsübertragsignal ein Ausgangsübertragsignal erzeugt, wobei die Übertragbildungsschaltung CT eine mit komplementären Transistoren T1, T3, T7, T9 aufgebaute, zwischen die beiden Pole +V, -V einer Spannungsversorgungsquelle geschaltete Komplementärstufe CS aufweist, die einen mit dem Ausgangsübertraganschluß CA verbundenen Mittelknoten K aufweist, der während einer Rechenphase bei gleichem Binarwert der der Addierstufe zugeführten Eingangsdatensignale ein diesem Binärwert entsprechendes Potential aufweist, wobei die Übertragbildungsschaltung CT außerdem eine Koppelschaltung PKS, NKS aufweist, die einen Endes mit einem Pol +V, -V der Spannungsversorgungsquelle verbunden ist und deren anderes Ende M1, M2 bei ungleichen Binärwerten der Eingangssignaldaten das Potential des einen Pols +V, -V aufweist, wobei die Übertragbildungsschaltung CT ferner einen Schalttransistor T5, T6 aufweist, dessen Hauptstrecke zwischen den Mittelknoten K und das andere Ende M1, M2 der Koppelschaltung PKS, NKS geschaltet ist und dessen Steuerelektrode mit dem Eingangsübertragsignal beaufschlagt wird, und wobei eine Voreinstelleinrichtung VSA, VSB vorgesehen ist, welche während einer Voreinstellphase die Addierstufe vor deren jeweiligem Rechenzyklus in einen keinen Ausgangsübertrag darstellenden Voreinstellzustand bringt.

Da die Addierstufen des erfindungsgemäßen Paralleladdierwerks in ihrer Übertragbildungsschaltung je nur noch einen Schalttransistor aufweisen, der von dem Übertragsignal der vorausgehenden Addierstufe geschaltet werden muß, ist gegenüber herkömmlicher Gegentakt-Technik, beispielsweise CMOS-Technik, eine Reduzierung der umzuladenden Eingangskapazität auf die Hälfte erreicht worden. Dies bewirkt eine entsprechend schnellere Umschaltung in den nicht-voreingestellten Schaltungszustand der übertragbildungsschaltung.

Je nach dem, ob man sich in dem auf das zugeführte Übertragsignal reagierenden Teil der Übertragbildungsschaltung auf Transistoren des einen oder des anderen Leitfähigkeitstyps beschränkt, erhält man eine Addierstufe, die nur aus dem einen bzw. dem anderen binären Schaltungszustand umgeschaltet werden kann. Auf welchen Schaltzustand die Übertragbildungsschaltung voreingestellt wird, hängt somit von der Auswahl des Leitfähigkeittyps der Transistoren für diesen Schaltungsteil ab. Zur leichteren Darstellung wird im folgenden von N-Typ-Addierstufe bzw. von P-Typ-Addierstufe gesprochen, je nach dem, ob der auf das zugeführte Übertragsignal reagierende Schaltungsteil der Addierstufe mit P-Kanal-Transistoren oder N-Kanal-Transistoren aufgebaut ist. Im Fall einer Realsierung mit anderen Technologien als CMOS-Technik, beispielsweise Bipolar-Technik, wären entsprechende Bezeichnungen zu wählen.

Bei einer bevorzugten Ausführungsform der Erfindung werden aufeinanderfolgende Stufen des Paralleladdierwerks abwechselnd durch eine N-Typ-Addierstufe und eine P-Typ-Addierstufe gebildet. Dies hat den Vorteil, daß man zwischen den einzelnen Addierstufen keine Übertraginverter benötigt. Solche Übertraginverter sind erforderlich, wenn man Addierstufen gleichen Typs hintereinanderschaltet.

In einer besonders bevorzugten Ausführungsform sind die Addierstufen des Paralleladdierwerks in zwei Gruppen unterteilt, die beide je abwechselnd in einer Voreinstellphase und in einer Rechenphase betrieben werden. Dabei wird jeweils die eine Gruppe in der Rechenphase betrieben, während die jeweils andere Gruppe in der Voreinstellphase gehalten wird. Bei einer derartigen Ausführungsform kommt man mit einer relativ einfachen Ansteuerlogik für die Voreinstellungen der einzelnen Addierstufen aus. Vorzugsweise nimmt man die Gruppenunterteilung so vor, daß in aufsteigender Wertigkeit der Addierstufen gesehen zunächst lauter Addierstufen der einen Gruppe und danach lauter Addierstufen der anderen Gruppe aufeinanderfolgen. Bevorzugtermaßen weist jede Gruppe gleich viele Addierstufen auf.

Addierstufen, die zu unterschiedlichen Gruppen gehören, werden vorzugsweise über eine Zwischenspeichereinrichtung miteinander gekoppelt. Mit der Zwischenspeichereinrichtung wird der von der vorausgehenden Addierstufe berechnete Übertrag während des Phasenwechsels für die in die Rechenphase eintretende nachfolgende Addierstufe zwischengespeichert, wobei die Zwischenspeichereinrichtung vorzugsweise ebenso wie die Addierstufen in einer eigenen Voreinstellphase voreingestellt wird. Mit Hilfe der Zwischenspeichereinrichtung wird verhindert, daß während der Phasenumschaltungen Überträge verlorengehen oder fehlerhafte Überträge entstehen.

Bei einer besonders bevorzugten Ausführungsform der Erfindung wird das Ausgangsübertragsignal der für die höchstwertige Stelle zuständigen Addierstufe dem Eingangsübertraganschluß der niederwertigsten Addierstufe zur Verfügung gestellt. Dies geschieht mittels einer Übertragrückführschaltung und vorzugsweise einer Übertragauswahlschaltung. Das Weiterschalten des von der höchstwertigen Addierstufe gebildeten Ausgangsübertragsignals erfolgt auch hier, wie bei den erfindungsgemäßen Addierstufen, durch einen einzigen Transistor. Der Übertragrückführpfad wird daher ebenfalls in einer Voreinstellphase voreingestellt. Da durch diese Maßnahme nicht nur die Übergabe des berechneten Übertrags zur nächsthöherwertigen Addierstufe schnell erfolgt, sondern auch der sich bei der Addition zweier Datenworte ergebende Ausgangsübertrag der höchstwertigen Addierstufe dem Eingangsübertraganschluß der niedrigstwertigen Addierstufe schnell zur Verfügung steht, eignet sich diese besonders bevorzugte Ausführungsform zum schnellen Akkumulieren von Datenworten. Hierbei wird die in einem Rechenschritt ermittelte Summe als Summand für den darauffolgenden Rechenschritt verwendet und das Ausgangsübertragsignal der höchstwertigen Addierstufe wird dem Eingangsübertraganschluß der niederwertigsten Addierstufe zugeführt.

Die an dieser Stelle beschriebene besonders bevorzugte Ausführungsform ermöglicht auch ein schnelles Addieren von Datenworten, die zum Beispiel doppelt so viele Bits pro Datenwort aufweisen, wie das Paralleladdierwerk Addierstufen beinhaltet. In solch einem Fall werden zunächst die niedrigerwertigen Bits der Datenworte addiert.

Danach werden die höherwertigen Bits der Datenworte addiert, wobei nun das Ausgangsübertragsignal der höchstwertigen Addierstufe, das während der Addition des niedrigerwertigen Teils der zu addierenden Datenworte ermittelt wurde, über die Übertragrückführschaltung und bevorzugterweise über die Übertragauswahlschaltung der niedrigstwertigen Addierstufe zugeführt wird.

Erfindungsgemäß wird der oben erwähnten Übertragauswahlschaltung außer dem Ausgangsübertragsignal der höchstwertigen Addierstufe an einem Eingang auch das Übertragmerker- bzw. Übertragflagsignal zugeführt. Durch geeignet gewählte Steuersignale, die der Übertragauswahlschaltung zugeführt werden, kann bestimmt werden, ob dem Eingangsübertraganschluß der niedrigstwertigen Addierstufe, wahlweise das Ausgangsübertragsignal der höchstwertigen Addierstufe, das Übertragmerkersignal oder eine konstante "0" bzw. "1" zugeführt werden soll.

Zusätzliche Weiterbildungen der Erfindung sind aus Unteransprüchen entnehmbar.

Die Erfindung sowie weitere Aufgaben- und Vorteilsaspekte der Erfindung werden nun anhand von Ausführungsformen näher erläutert. In den zugehörigen Zeichnungen zeigen:

Fig. 1    ein vierstufiges Paralleladdierwerk herkömmlicher Art;

Fig. 2    eine Addierstufe herkömmlicher Art des Paralleladdierwerks nach Fig. 1;

Fig. 3    eine P-Typ-Addierstufe erfindungsgemäßer Art;

Fig. 4    eine N-Typ-Addierstufe erfindungsgemäßer Art;

Fig. 5    ein vierstufiges Paralleladdierwerk erfindungsgemäßer Art;

Fig. 6    ein vierstufiges Paralleladdierwerk nach besonders bevorzugter erfindungsgemäßer Art;

Fig. 7A    eine bei dem Paralleladdierwerk nach Fig. 6 verwendbare übertragrückführschaltung erfindungsgemäßer Art;

Fig. 7B    eine Darstellung einer bei dem Paralleladdierwerk nach Fig. 6 verwendbaren Übertragauswahlschaltung erfindungsgemäßer Art; und

Fig. 8    eine Darstellung einer Zwischenspeicherschaltung erfindungsgemäßer Art.

Das in Fig. 1 gezeigte herkömmliche Paralleladdierwerk weist vier Addierstufen AS0, AS1, AS2 und AS3 auf, die ein Datenwort A0 A1 A2 A3 und ein Datenwort B0 B1 B2 B3 addieren sollen. Die Indices 0, 1, 2 und 3 sind den einzelnen Addierstufen in aufsteigender Bit-Wertigkeit zugeordnet. Jede Addierstufe gibt ausgangsseitig einerseits ein Summensignal und andererseits ein Übertragsignal ab. Die Summensignale aller vier Addierstufen bilden das Datenwort der von dem Paralleladdierwerk errechneten Gesamtsumme. Das Ausgangsübertragssignal einer jeden Addierstufe wird der nachfolgenden Addierstufe zugeführt, damit jede Addierstufe den Übertrag der vorausgehenden Addierstufe mitverarbeiten kann. Der für die niedrigstwertige Stelle zuständigen Addierstufe AS0 wird als Übertragssignal konstant der Datenwert "0" eingegeben.

Jede der Addierstufen AS0 bis AS3 ist gemäß Fig. 2 aufgebaut. Diese Addierstufe weist zwei Dateneingänge AE und BE auf, denen die zu addierenden Datenwerte zugeführt werden. Die von dieser Addierstufe errechnete Summe steht am Summenausgang SA zur Verfügung. Die Addierstufe erhält über einen Übertrageingang CE das Übertragsignal der vorausgehenden Addierstufe und gibt über einen Übertragausgang CA ihr Übertragsignal an die nachfolgende Addierstufe.

Die Addierstufe weist eine Summierschaltung ST und eine Übertragbildungsschaltung CT auf. Beide sind zwischen einen positiven Pol +V und einen negativen Pol -V einer Spannungsversorgungsquelle geschaltet.

Die Übertragbildungsschaltung CT umfaßt eine Komplementärstufe CS, zwei Koppelstufen PKS, NKS und zwei Schalttransistoren T5 und T6.

Mit der summenschaltung ST wird die Summe aus den den beiden Dateneingängen AE und BE zugeführten Dateneingangssignalen gebildet. Dies unter Berücksichtigung eines über CE zugeführten Übertrages von einer vorausgehenden Addierstufe und eines von CT aus den Eingangsdatensignalen gebildeten Übertrages. Da sich die vorliegende Erfindung auf die Übertragschaltung CT bezieht, braucht auf den Aufbau und die Funktion der Summierschaltung ST hier nicht im einzelnen eingegangen zu werden.

Die Übertragbildungsschaltung CT umfaßt eine Komplementärstufe CS in Form einer mit dem positiven Pol +V verbundenen Reihenschaltung mit zwei P-Kanal-Transistoren T7, T9 und eine mit dem negativen Pol -V verbundene Reihenschaltung mit zwei N-Kanal-Transistoren T1, T3. Die beiden Reihenschaltungen sind in einem Mittelknoten K miteinander verbunden.

Die Übertragbildungsschaltung CT umfaßt ferner eine P-Koppelschaltung PKS und eine N-Koppelschaltung NKS. Die P-Koppelschaltung PKS weist zwei parallel geschaltete P-Kanal-Transistoren T8 und T10 auf, die einen Endes mit dem positiven Pol +V und anderen Endes in einem Schaltungsknoten M1 miteinander verbunden sind. Die Steuerelektroden dieser beiden Transistoren sind mit je einem der beiden Eingangsdatenanschlüsse AE bzw. BE verbunden. Die N-Koppelschaltung NKS weist eine Parallelschaltung aus zwei N-Kanal-Transistoren T2, T4 auf, die einen Endes an den negativen Pol -V angeschlossen und anderen Endes in einem Schaltungsknoten M2 miteinander verbunden sind. Die Steuerelektroden dieser Transistoren sind je mit einem der Eingangsdatenanschlüsse BE bzw. AE verbunden.

Zwischen die Schaltungsknoten M1 und M2 ist eine Reihenschaltung aus einem P-Kanal-Transistor T6 und einem N-Kanal-Transistor T5 geschaltet. Deren Verbindungspunkt ist einerseits mit dem Mittelknoten K der Komplementärstufe CS und andererseits sowohl mit dem Übertragausgangsanschluß CA und mit der Summierschaltung ST verbunden. Die Steuerelektroden von T5 und T6 sind gemeinsam mit dem Übertrageingangsanschluß CE verbunden.

Es wird nun die Funktionsweise der Übertragbildungsschaltung CT betrachtet.

Wenn die Binärwerte der beiden über AE und BE zugeführten Eingangsdatensignale gleich sind, leiten entweder die P-Kanal-Transistoren T7, T9 oder die N-Kanal-Transistoren T1, T3 der Komplementärstufe CS, so daß das Potential des Mittelknotens K in etwa entweder dem des positiven Pols +V oder dem des negativen Pols -V entspricht. Am Übertragausgangsanschluß CA entsteht daher ein dem Binärwert der beiden Eingangsdatensignale entsprechendes Potential. Sind die Binärwerte der beiden Eingangsdatensignale dagegen verschieden voneinander, sperren zwei der vier in Reihe geschalteten Transistoren der Komplementärstufe CS, so daß am Mittelknoten K das vorher vorhandene Potential vorliegt.

Bei ungleichen Binärwerten der beiden Eingangsdatensignale leitet in jeder der beiden Koppelschaltungen PKS und NKS einer der beiden Transistoren, so daß die Potentiale der Schaltungsknoten M1 und M2 im wesentlichen das Potential des positiven Pols +V bzw. des negativen Pols -V annehmen. Bei gleichen Binärwerten der Eingangsdatensignale leiten die beiden Transistoren der einen oder der anderen Koppelschaltung PKS, während die Transistoren der jeweils anderen Koppelschaltung beide gesperrt sind. D.h., es nimmt einer der beiden Schaltungsknoten M1 und M2 im wesentlichen das Potential des benachbarten Pols der Spannungsquelle an, während das Potential des anderen Schaltungsknotens unbestimmt bleibt.

Wenn die Binärwerte der beiden Eingangsdatensignale gleich sind, wird das Potential und damit der Binärwert des Ausgangsübertragsignals durch das Potential des Mittelknotens K bestimmt. Ist der Binärwert der beiden Eingangsdatensignale "0", liegt der Mittelknoten K auf positivem Potential, so daß am Ausgangsübertraganschluß CA der Binärwert "1" auftritt. Ist der Binärwert der beiden Eingangsdatensignale "1", entsteht über den Mittelknoten K am Ausgangsübertraganschluß CA negatives Potential, d.h. der Binärwert "0". Am Ausgangsübertraganschluß CA tritt somit das Übertragsignal in invertierter Form auf.

Die Funktion der Schalttransistoren T5 und T6 wird dann wirksam, wenn die Eingangsdatensignale unterschiedliche Binärwerte aufweisen. Dann befindet sich die Reihenschaltung aus T5 und T6 einen Endes auf dem Potential von +V und anderen Endes auf dem Potential von -V. Wird über den Eingangsübertraganschluß CE ein Eingangsübertragsignal mit dem Binärwert "0" zugeführt, leitet T6, während T5 sperrt. Daher nimmt das Potential am Ausgangsübertraganschluß CA das Potential von +V an, weist somit den Binärwert "1" auf. Besitzt das Eingangsübertragsignal dagegen den Binärwert "1", leitet T5, während T6 sperrt. Der Binärwert am Ausgangsübertraganschluß CA wird daher zu "0".

Bei den vorausgehenden Funktionsbetrachtungen wurde davon ausgegangen, daß dem höheren Potentialwert der Binärwert "1" zugeordnet wird. Es ist aber auch die umgekehrte Binärwertzuordnung möglich.

Bei einem Wechsel des Binärwerts des über CE zugeführten Eingangsübertragsignals müssen beide Transistoren T5 und T6 umgeschaltet werden. Das bedeutet, daß die Eingangskapazitäten beider Transistoren umgeladen werden müssen. Es ergibt sich daher eine Umschaltzeit, in welche die Summe dieser beiden Eingangskapazitäten eingeht. Diese Umschaltzeit bestimmt Tc in der eingangs angegebenen Gleichung. D. h., der Wert dieser Umschaltzeit ist wesentlich für die Gesamtrechenzeit Tt des Addierwerks verantwortlich.

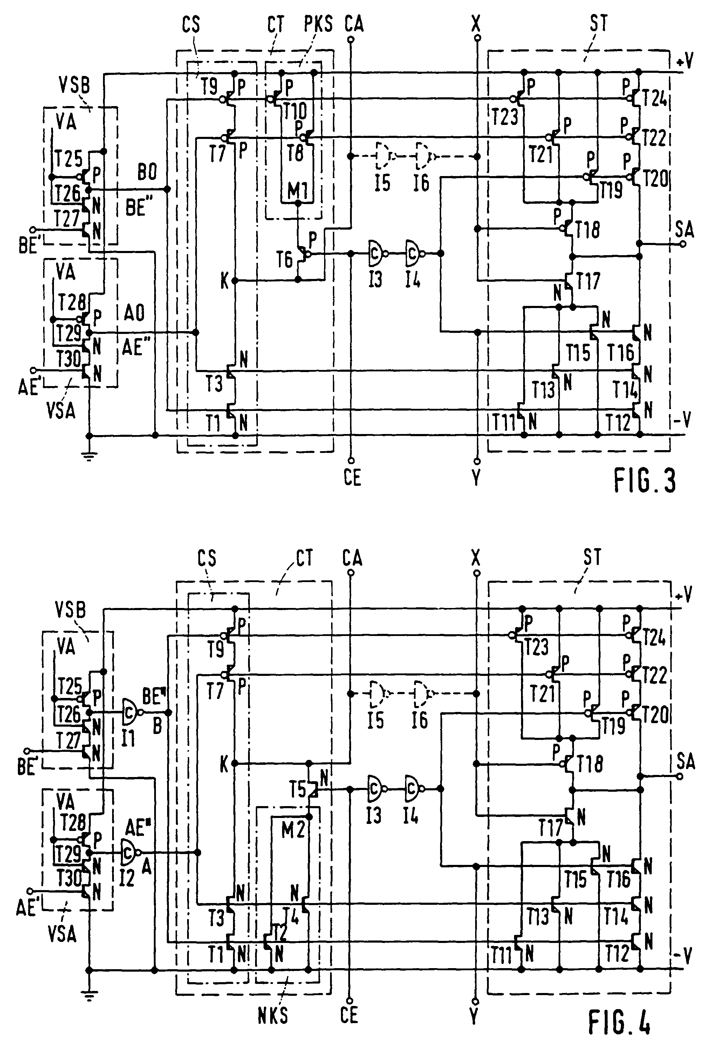

Fig. 3 zeigt eine erfindungsgemäße P-Typ-Addierstufe. Diese ist wie Fig. 2 grundsätzlich in CMOS-Technik ausgebildet. Ihre Summierschaltung ST stimmt mit der von Fig. 2 überein. Weitere Übereinstimmung besteht hinsichtlich der Komplementärstufe CS innerhalb der Übertragschaltung CT. Die Übertragschaltung CT der Fig. 3 weicht von der Übertragbildungsschaltung CT der Fig. 2 insofern ab, als sie nur eine P-Koppelschaltung PKS und einen P-Kanal-Schalttransistor T6 aufweist, wohingegen die N-Koppelschaltung NKS und der N-Kanal-Schalttransistor T5 fehlen.

Abweichungen gegenüber der bekannten Addierstufe weist die erfindungsgemäße Schaltung nach Fig. 3 außerdem in ihrem Eingangsbereich auf. Dort ist jedem Eingangsdatenanschluß BE' und AE' eine Voreinstellstufe VSA bzw. VSB zugeordnet. Jede Voreinstellstufe umfaßt eine Reihenschaltung aus 3 Transistoren T25, T26, T27 bzw. T28, T29, T30, die zwischen die beiden Pole +V und -V geschaltet ist. Die +V benachbarten Transistoren sind je P-Kanal-Transistoren, während die restlichen Transistoren einer jeder Voreinstellstufe N-Kanal-Transistoren sind. In jeder voreinstellstufe VSA bzw. VSB ist die Steuerelektrode eines der beiden N-Kanal-Transistoren mit dem Eingangssignalanschluß AE' bzw. BE' verbunden. Die Steuerelektroden der beiden anderen Transistoren einer jeden Voreinstellstufe sind mit einem Voreinstellanschluß VA verbunden, der mit einer (in Fig. 3 nicht gezeigten) Voreinstellsignalquelle gekoppelt ist. Der Verbindungspunkt zwischen den beiden Transistoren, deren Steuerelektroden gemeinsam mit VA verbunden sind, ist an die Steuerelektroden zweier Transistoren der Komplementärstufe CS angeschlossen.

Wie bei der bekannten Addierstufe nach Fig. 2 ist bei der erfindungsgemäßen Addierstufe nach Fig. 3 der Eingangsübertraganschluß CE mit den Steuerelektroden von P-Kanal-Transistoren T19, T20 und den Steuerelektroden von N-Kanal-Transistoren T15, T16 der Summierschaltung ST verbunden, um bei der Summenbildung den von der vorausgehenden Addierstufe gelieferten Übertrag berücksichtigen zu können. Im Fall der erfindungsgemäßen Schaltung sind in diese Verbindung zwei Inverter I3 und I4 geschaltet.

Die Funktionsweise der erfindungsgemäßen Addierstufe ist hinsichtlich der Summierschaltung ST die gleiche wie bei der bekannten Schaltung, so daß hier keine weiteren Erläuterungen erforderlich sind. Aufgrund der abweichenden Übertragbildungsschaltung CT und der Voreinstellstufen VSA und VSB kommt es zu der nachfolgend erläuterten Funktionsweise der Addierstufe nach Fig. 3.

Bei der folgenden Betrachtung wird wieder davon ausgegangen, daß dem höheren Potential der Binärwert "1" und dem niedrigeren Potentialwert der Binärwert "0" zugeordnet ist.

Zunächst wird angenommen, daß an den Voreinstellanschlüssen VA der Binärwert "1" anliegt. Das Potential an dem Verbindungspunkt BE" zwischen den Transistoren T25 und T26 und das Potential an dem Verbindungspunkt AE" zwischen den Transistoren T28 und T29 hängt dann von dem jeweiligen Binärwert an den Eingangsdatenanschlüssen BE' bzw. AE' ab. Weisen die Verbindungspunkte BE" und AE" gleiche Binärwerte auf, verhält sich die Schaltung nach Fig. 3 genauso wie die bekannte Schaltung nach Fig. 2. Sind beide Binärwerte "0", nimmt der Mittelknoten K und damit der Ausgangsübertraganschluß CA den Binärwert "1" an. Sind die Binärwerte bei AE" und BE" beide "1", tritt am Ausgangsübertraganschluß CA der Binärwert "0" auf. Aufgrund der Voreinstellstufen VSA und VSB kommt es zu einer Inversion der Eingangsdatensignale zwischen AE' und A" bzw. BE' und BE". Bezüglich der Eingangsdatenanschlüsse AE' und BE' tritt am Ausgangsübertraganschluß CA das nicht-invertierte Ausgangsübertragsignal auf. Bei der bekannten Schaltung nach Fig. 2 tritt dagegen bei gleichen Eingangsdatensignalen an den Eingangsdatenanschlüssen AE und BE am Ausgangsübertraganschluß CA das Ausgangsübertragsignal in invertierter Form auf.

Als nächstes wird der Fall betrachtet, daß an den Eingangsdatenanschlüssen AE' und BE' Eingangsdatensignale mit unterschiedlichen Binärwerten liegen. Dies hat zur Folge, daß auch an den Verbindungspunkten AE" und BE" unterschiedliche Binärwerte auftreten. Bei derartigen Eingangsdatensignalen bleiben von den vier Transistoren der Komplementärstufe CS mindestens zwei Transistoren unterschiedlichen Leitfähigkeitstyps im Sperrzustand vorgespannt. Der Potentialwert am Mittelknoten K bleibt daher unverändert entweder dem Binärwert "0" oder dem Binärwert "1" entsprechend, je nach dem, welchen gleichen Binärwert die beiden Eingangsdatensignale zuvor hatten. Da nun Eingangsdatensignale mit ungleichem Binärwert vorhanden sind, leitet einer der beiden P-Kanal-Transistoren der P-Koppelschaltung PKS, so daß an dem Schaltungsknoten M1 in etwa das Potential des positiven Pols +V auftritt.

An dem Eingangübertraganschluß CE und damit an der Steuerelektrode des Schalttransistors T6 kann nun je nach dem Wert des von der vorausgehenden Addierstufe gelieferten Übertrags der Binärwert "0" oder der Binärwert "1" auftreten. Befindet sich der Mittelknoten K auf niedrigem Potential entsprechend dem Binärwert "0", wird der Schalttransistor T6 leitend geschaltet, wenn über den Eingangsübertragsanschluß CE der Binärwert "0", also niedriges Potential zugeführt wird. T6 schaltet dann das positive Potential vom Schaltungsknoten M1 zum Mittelknoten K durch, so daß am Ausgangsübertraganschluß CA hohes Potential entsprechend dem Binärwert "1" auftritt. Wird dagegen in dem Zustand, in welchem sich der Mittelknoten K auf niedrigem Potential befindet, über den Eingangsübertraganschluß CE positives Potential entsprechend dem Binärwert "1" zugeführt, wird der Schalttransistor T6 nicht leitend geschaltet sondern bleibt im Sperrzustand. Am Potential des Mittelknotens K ändert sich daher nichts und der Ausgangsübertraganschluß CA bleibt auf dem Binärwert "0".

Liegt aber der Mittelknoten K aufgrund der Vorgeschichte auf hohem Potential entsprechend dem Binärwert "1", liegen sowohl die Source- als auch die Drain-Elektrode von T6 an hohem Potential, so daß sich T6 nicht schalten läßt, unabhängig davon, welches Übertragssignal über den Eingangsübertragsanschluß CE zugeführt wird. D.h., wenn sich der Mittelknoten K auf dem Binärwert "1" befindet, ist der Binärwert des Ausgangsübertraganschlusses CA nicht mehr umschaltbar. Es ist daher nicht mehr sichergestellt, daß von der Übertragbildungsschaltung der korrekte Übertragwert gebildet wird.

Bei einer derartigen Addierstufe kann also der Zustand auftreten, daß man zur Bildung eines korrekten Übertrags den Schalttransistor T6 umschalten müßte, aber nicht kann. Dieses Problem wird erfindungsgemäß durch die Voreinstellschaltung überwunden. Mit dieser wird die Addierstufe vor Beginn der eigentlichen Rechenphase in einen solchen Zustand gebracht, daß am Mittelknoten K dasjenige Potential auftritt, nämlich niedriges Potential entsprechend dem Binärwert "0", bei welchem sich der Schalttransistor T6 schalten läßt. Niedriges Potential am Mittelknoten K ergibt sich dann, wenn sowohl an AE" als auch an BE" hohes Potential entsprechend dem Binärwert "1" vorhanden ist. Dieser Zustand wird dadurch aufgezwungen, daß an die Voreinstellanschlüsse VA der Voreinstellstufen VSA und VSB je niedriges Potential entsprechend dem Binärwert "0" angelegt wird. Bei dieser Ansteuerung leitet der P-Kanal-Transistor T25 bzw. T28 und sperrt der N-Kanal-Transistor T26 bzw. T29. Dadurch wird über T25 bzw. T28 das Potential des positiven Pols +V auf BE" bzw. AE" gebracht. Die dabei vorhandenen Binärwerte an den Eingangsdatenanschlüssen BE' und AE' haben keinen Einfluß, weil T26 und T29 gesperrt sind.

Aufgrund dieser Voreinstellung während einer Voreinstellphase startet die Addierstufe jede Rechenphase mit dem Schaltzustand der Übertragbildungsstufe CS, aus welchem heraus der Schalttransistor T6 umgeschaltet werden kann.

In Fig. 4 ist eine Ausführungsform einer N-Typ-Addierstufe dargestellt. Sie stimmt weitgehend mit der in Fig. 3 gezeigten P-Typ-Addierstufe überein. Unterschiedlich ist lediglich, daß anstelle einer P-Koppelschaltung eine N-Koppelschaltung NKS vorhanden ist, daß der Schalttransistor T5 ein N-Kanal-Transistor ist und daß zwischen die Voreinstellstufen VSA und VSB und die Schaltungspunkte BE" bzw. AE" je ein Inverter I1 bzw. I2 eingefügt ist.

Da bei der N-Typ-Addierstufe der Schalttransistor und die Transistoren der Koppelstufe umgekehrten Leitfähigkeitstyp wie im Fall der P-Typ-Addierstufe aufweisen und die N-Koppelstufe NKS an den negativen Pol -V angeschlossen ist, muß der Mittelknoten K während der Voreinstellphase auf hohen Potentialwert entsprechend dem Binärwert "1" voreingestellt werden, um zu gewährleisten, daß der Schalttransistor T5 umgeschaltet werden kann, wenn dies aufgrund des Binärwerts des zugeführten Übertragsignals erforderlich ist.

Bei beiden Typen von Addierstufen wird also durch die Voreinstellschaltung bewirkt, daß die Übertragbildungsschaltung in den Zustand gebracht wird, in welchem sie von dem zugeführten Übertragsignal nicht geschaltet werden könnte. Erfordert in der nachfolgenden Rechenphase das zugeführte Übertragsignal, daß die Übertragbildungsschaltung diesen Schaltzustand aufweist, wird der durch die Voreinstellung bewirkte Schaltzustand der Übertragbildungsschaltung einfach aufrechterhalten. Erfordert das zugeführte Übertragsignal dagegen, daß sich die Übertragbildungsschaltung in dem anderen Schaltzustand befindet, wird eine entsprechende Umschaltung vorgenommen.

Ein Paralleladdierwerk wird vorzugsweise so aufgebaut, daß Addierstufen entgegengesetzten Typs aufeinanderfolgen. D.h., auf eine P-Typ-Addierstufe folgt eine N-Typ-Addierstufe und auf diese wiederum eine P-Typ-Addierstufe. Der Vorteil dieses Aufbaus liegt darin, daß zwischen den Ausgangsübertraganschluß und den Eingangsübertraganschluß der je aufeinanderfolgenden Stufen kein Inverter geschaltet zu werden braucht. Denn während die P-Typ-Addierstufe die Zufuhr des invertierten Eingangübertragssignals erfordert und an ihren Ausgang das nichtinvertierte Ausgangsübertragssignal abgibt, erfordert die P-Typ-Addierstufe die Zufuhr des Eingangübertragsignals in nicht-invertierter Form, während sie an ihrem Ausgangübertraganschluß das Übertragsignal in invertierter Form abgibt.

Eine zusätzliche Verbesserung der Verarbeitungsgeschwindigkeit erreicht man dadurch, daß man den Eingangsübertraganschluß CE und den Ausgangsübertraganschluß CA einer jeden Addierstufe über eine Lastpuffereinrichtung mit der Summierschaltung ST dieser Addierstufe koppelt. Bei den bevorzugten Ausführungsformen gemäß Fig. 3 und 4 ist die Lastpuffereinrichtung durch eine Reihenschaltung aus zwei Invertern I3 und I4 gebildet. Die Lastpuffereinrichtung bewirkt, daß die Eingangskapazität des Schalttransistors der eigenen sowie der nachfolgenden Addierstufe nicht durch die Summierschaltung mehr als nötig belastet wird.

Bei der Ausführungsform nach Fig. 4 sind neben den Invertern I3 und I4, die zwischen den Steueranschluß des Schalttransistors T5 und die Steueranschlüsse der Transistoren T15, T16 und T19, T20 der Summierschaltung ST geschaltet sind, zwei weitere, gestrichelt dargestellte Inverter 15 und 16 in Reihenschaltung vorgesehen, die zwischen den Mittelknoten K und die Steueranschlüsse der Transistoren T17 und T18 der Summierschaltung ST geschaltet sind.

Die Inverter-Reihenschaltung I5, I6 ist deshalb gestrichelt gezeichnet, weil sie bei der bevorzugten Ausführungsform nicht vorhanden sind sondern deren Funktion durch die Inverter I3 und I4 der je nachfolgenden Addierstufe übernommen wird. Zu diesem Zweck weist jede Addierstufe einen mit dem Ausgang des Inverters I4 verbundenen Ausgangsanschluß Y und einen mit den Steuerelektroden der Transistoren T17 und T18 der Summierschaltung ST verbundenen Eingangsanschluß X auf. Dabei ist der Eingangsanschluß X einer Addierstufe mit dem Ausgangsanschluß Y der je nachfolgenden Addierstufe verbunden.

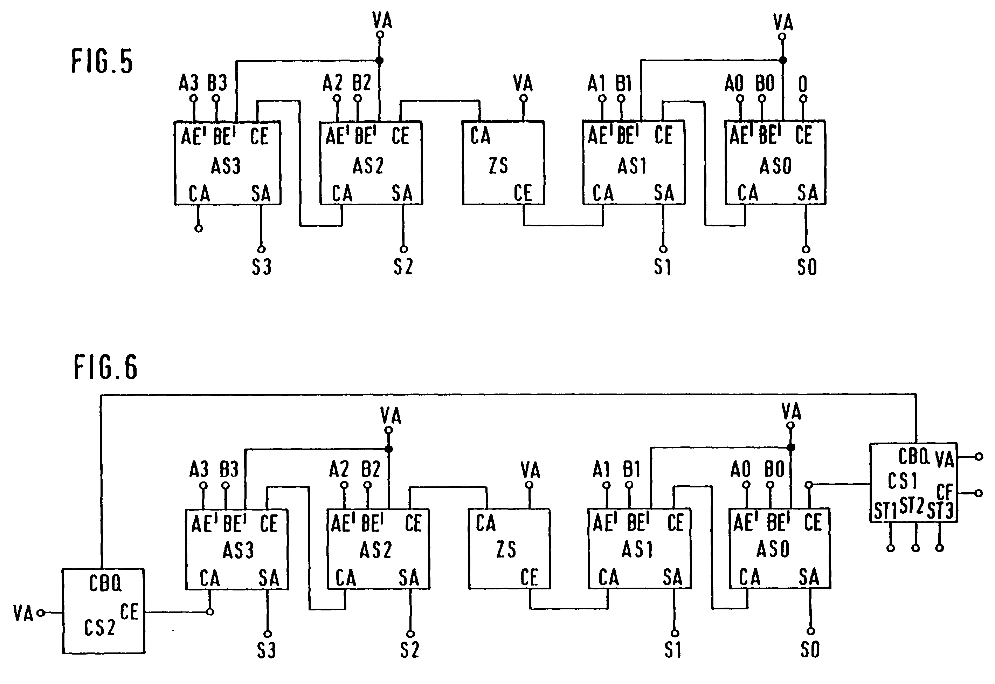

Ein erfindungsgemäßes Paralleladdierwerk mit vier Addierstufen ist als Beispiel in Fig. 5 gezeigt. Bei dieser Ausführungsform bilden Addierstufen AS0 und AS1 eine erste Gruppe und Addierstufen AS2 und AS3 eine zweite Gruppe. In jeder Gruppe werden die beiden Addierstufen gleichzeitig in der Voreinstellphase bzw. der Rechenphase betrieben. Während sich die eine Gruppe in der Voreinstellphase befindet, wird die andere Gruppe in der Rechenphase betrieben.

Zwischen den beiden Gruppen ist eine Zwischenspeichereinrichtung ZS vorgesehen, welche den von der höherwertigeren Addierstufe AS1 der ersten Gruppe während deren Rechenphase gebildeten Übertrag vorübergehend zwischenspeichert und danach an die niederwertigere Addierstufe AS2 gibt, wenn die Gruppe mit den Addierstufen AS2 und AS3 von der Voreinstellphase in die Rechenphase übergegangen ist. Hiermit wird verhindert, daß während der Phasenumschaltungen der beiden Gruppen Überträge verlorengehen oder fehlerhafte überträge entstehen.

Jede der beiden Gruppen weist einen Voreinstellanschluß VA auf, dem das Voreinstellsignal zugeführt wird, während sich die jeweils andere Gruppe in der Rechenphase befindet.

Eine besonders bevorzugte Ausführungsform eines erfindungsgemäßen Paralleladdierwerks mit vier Addierstufen ist als Beispiel in Fig. 6 gezeigt. Bei dieser Ausführungsform wird das in der höchstwertigen Addierstufe AS3 gebildete Ausgangsübertragsignal einem Eingang CE einer Übertragrückführschaltung CS2 zugeführt, die zuvor einen Ausgang CBQ mittels eines an einem Eingang VA anliegenden Voreinstellsignals, in einen keinen Übertrag kennzeichnenden Zustand gebracht hatte. Einer mit der Übertragrückführschaltung CS2 gekoppelten Übertragauswahlschaltung CS1 werden außer dem Ausgangsübertragsignal der höchstwertigen Addierstufe AS3 an einem Eingang VA ein Voreinstellsignal, an einem Eingang CF das Übertragmerkersignal und an Eingängen ST1, ST2 und ST3 Steuersignale zugeführt. Die Steuersignale dienen dazu, daß dem Eingangsübertraganschluß CE der niedrigstwertigen Addierstufe AS0 zuzuführende Übertragsignal auszuwählen.

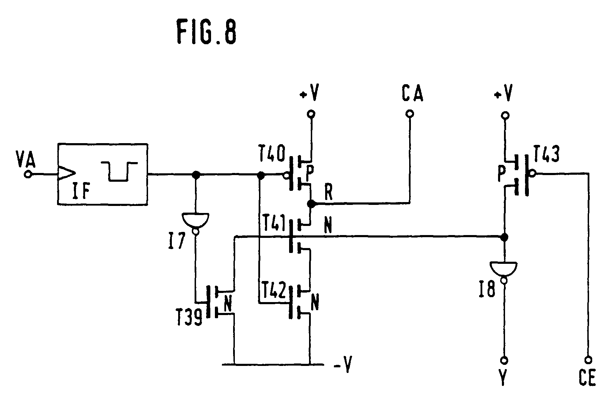

Die Zwischenspeichereinrichtung wird in einer eigenen Voreinstellphase für das Weitergeben des Übertrags vorbereitet. Zum selben Zeitpunkt, zu dem die höherwertigen Addierstufen in die Voreinstellphase geschaltet werden, ist auch die Zwischenspeichereinrichtung in ihrer Voreinstellphase. Die Voreinstellphase der Zwischenspeichereinrichtung ZS muß jedoch beendet werden, bevor an deren Eingang CE das Ausgangsübertragsignal anliegt, das durch die an sie angeschlossene niedrigerwertige Addierstufe berechnet worden ist. Erfindungsgemäß wird eine Zwischenspeichereinrichtung bevorzugterweise wie in Fig. 8 dargestellt aufgebaut. Es wird eine Reihenschaltung aus einem P-Kanal-Transistor T40 und zwei N-Kanal-Transistoren T41 und T42 verwendet, deren mit dem positiven Pol +V verbundener P-Kanal-Transistor T40 und deren mit dem negativen Pol -V verbundener N-Kanal-Transistor T42 gemeinsam vom Ausgang einer Impulsformerstufe IF, die eingangsseitig mit einer Voreinstellsignalquelleneinrichtung verbunden ist, angesteuert werden. Die Steuerelektrode des mittleren N-Kanal-Transistors T41 der Reihenschaltung ist einerseits mit dem Ausgang eines über eine Inverterstufe I7 vom Ausgang der Impulsformerstufe IF angesteuerten N-Kanal-Transistors T39 und andererseits über den Ausgang Y einer Inverterstufe I8 mit der Summierschaltung ST der vorausgehenden Addierstufe und einer Hauptelektrode eines P-Kanal-Transistors T43 verbunden, dessen zweite Hauptelektrode mit dem positiven Pol +V der Spannungsversorgungsquelle verbunden ist. Der mit dem Ausgangsübertraganschluß der vorausgehenden Addierstufe verbundene Eingangsübertraganschluß CE der Zwischenspeicherschaltung ZE ist mit der Steuerelektrode des Schalttransistors T43 verbunden. Der Ausgangsübertraganschluß CA der Zwischenspeicherschaltung ZE ist mit dem Eingangsübertraganschluß der nachfolgenden Addierstufe verbunden und bildet mit der Verbindung zwischen dem P-Kanal-Transistor T40 und dem mittleren N-Kanal-Transistor T41 der Reihenschaltung, einen Schaltungsknoten R. Die Voreinstellung der Zwischenspeicherschaltung ZS geschieht, indem die Impulsformerschaltung IF nachdem sie von der Voreinstellsignalquelleneinrichtung gestartet wurde, ihren Ausgang auf Nullpotential legt und dadurch den Schaltungsknoten R auf ein eine binäre "1" kennzeichnendes Potential bringt und über den Inverter I7 und den Ausgang des N-Kanal-Transistors T 39 sowie den Inverter I8 den Ausgang Y ebenfalls auf eine binäre "1" bringt. Dadurch ist die Zwischenspeicherschaltung voreingestellt und bleibt in diesem Zustand, bis sie durch ein am Eingang CE anliegendes, einen Übertrag kennzeichnendes Signal, geschaltet wird. Der Nullpotentialimpuls am Ausgang der Impulsformerschaltung IF wird beendet, bevor am Eingang CE der Zwischenspeicherschaltung ZS das von der vorhergehenden Addierstufe berechnete Ausgangsübertragsignal anliegt. Nach der Voreinstellphase leitet der Transistor T42, so daß, wenn der schnellschaltende P-Kanal-Transistor T43 durch eine, einen Übertrag kennzeichnende, binäre "0" leitend angesteuert wird, auch T41 leitet, dessen Ausgang über den Schaltungsknoten R eine einen Übertrag kennzeichnende binäre "0" an den Ausgang CA der Zwischenspeicherschaltung ZS legt. Über den Inverter I8 liegt nun am Ausgang Y eine logische "0".

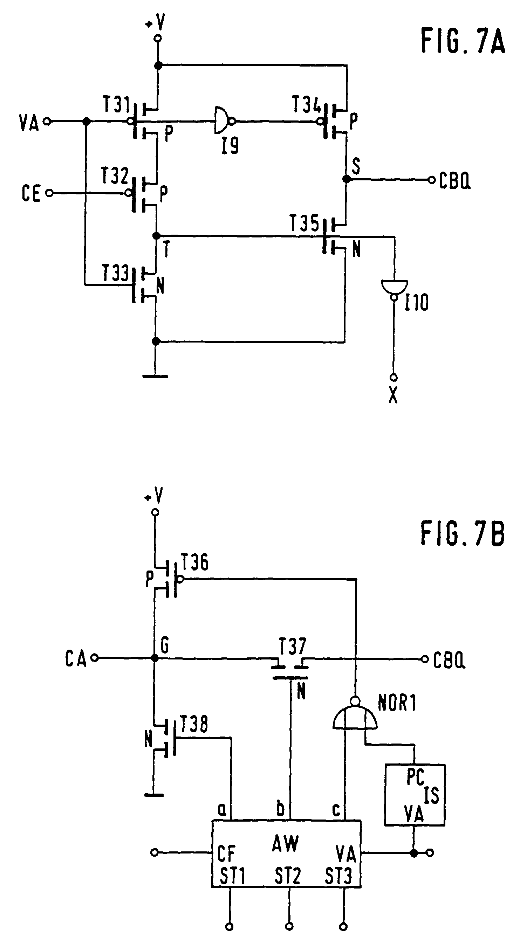

Die in den Figuren 7A und 7B gezeigte Übertragrückführschaltung CS2, sowie die Übertragauswahlschaltung CS1, stellen Schaltungsteile einer bevorzugten erfindungsgemäßen Ausführungsform dar. Mit ihrer Hilfe wird das Ausgangsübertragsignal der höchstwertigen Addierstufe dem Eingangsübertraganschluß der niedrigstwertigen Addierstufe zur Verfügung gestellt. Die in Figur 7B dargestellte Übertragauswahlschaltung CS1 bietet die Möglichkeit, durch Anlegen geeigneter Steuersignale an die Eingänge ST1, ST2, ST3 auszuwählen, welches Übertragsignal dem Eingangsübertraganschluß zugeführt werden soll. Damit für den Fall, daß das Ausgangsübertragsignal der höchstwertigen Addierstufe zugeführt werden soll, dies ebenso schnell erfolgen kann wie die Weitergabe der berechneten Ausgangsübertragsignale von Addierstufe zu Addierstufe, muß auch dieser Teil des Paralleladdierwerks so ausgeführt werden, daß der Übertragausgang CBQ voreingestellt wird. Denn wie die Ausgangsübertragsignale der Addierstufen kann auch dieses Ausgangsübertragsignal nur in eine Richtung, im Fall der Übertragrückführschaltung nur von dem keinen Übertrag kennzeichnenden Zustand, der binären "1", in den einen Übertrag kennzeichnenden Zustand, der binären "0", geschaltet werden. Die in Figur 7A dargestellte Übertragrückführschaltung CS2 ist so aufgebaut, daß sie eine Reihenschaltung aus einem N-Kanal-Transistor T33 und zwei P-Kanal-Transistoren T31, T32 aufweist, deren mit dem negativen Pol -V verbundener N-Kanal-Transistor T33 und deren mit dem positiven Pol +V verbundener P-Kanal-Transistor T31 gemeinsam über den Vorbereitungsanschluß VA von einer Voreinstellsignalquelle angesteuert werden. Der Steuerelektrode CE des mittleren P-Kanal-Transistors T32 der Reihenschaltung wird das Ausgangsübertragsignal der höchstwertigen Addierstufe zugeführt. Eine weitere Reihenschaltung eines P-Kanal-Transistors T34 und eines N-Kanal-Transistors T35 ist so zwischen den positiven Pol +V und den negativen Pol -V der Spannungsversorgungsquelle geschaltet, daß die eine Hauptelektrode des P-KanalTransistors T34 mit dem positiven Pol +V verbunden ist und seine zweite Hauptelektrode mit der einen Hauptelektrode des N-Kanal-Transistors T35 und dem Ausgang CBQ der Übertragrückführschaltung CS1 den Schaltungsknoten S bildet. Die Steuerelektrode des P-Kanal-Transistors T34 ist über einen Inverter I9 mit der Steuerelektrode des P-Kanal-Transistors T31 der aus drei Transistoren bestehenden Reihenschaltung verbunden. Der von je einer Hauptelektrode des P-Kanal-Transistors T32 und des N-Kanal-Transistors T33 mit der Steuerelektrode des N-Kanal-Transistors T35 gebildete Schaltungsknoten T ist über einen Inverter I10 mit dem Ausgang X, der der Summierschaltung ST der höchstwertigen Addierstufe den in dieser Stufe berechneten Übertrag zuführt, verbunden.

Die in Figur 7B dargestellte erfindungsgemäße Ausführungsform der Übertragauswahlschaltung CS1 weist eine Reihenschaltung eines am positiven Pol +V angeschlossenen P-Kanal-Transistors T36 und eines mit dem negativen Pol -V verbundenen N-Kanal-Transistors T 38 auf. Mit dem Verbindungspunkt G dieser Transistoren ist eine Hauptelektrode, des das Ausgangsübertragsignal der höchstwertigen Addierstufe zuführenden N-Kanal-Transistors T37 verbunden. Die Übertragauswahlschaltung CS1 weist eine Auswahllogik AW auf, die die ihren Eingängen ST1, ST2, ST3 Zugeführten Steuersignale sowie das Übertragmerkersignal und das Voreinstellsignal auswertet und die Transistoren T36, T37, T38 der Übertragauswahlschaltung CS1 über Auswahllogiksignale a, b, c so auswählt, daß je nach der Kombination der jeweiligen Steuersignale entweder das von der Übertragrückführschaltung CS2 zugeführte Ausgangsübertragssignal CBQ über den Transistor T37 an den Übertragausgang CA der Übertragauswahlschaltung CS1 gelangt, oder die Transistoren T36, T38 so angesteuert werden, daß sie eine konstante binäre "0" bzw. "1" oder das Übertragmerkersignal CF an den Übertragausgang CA legen.

In der Übertragauswahlschaltung CS1 ist eine vom Voreinstellsignal angesteuerte Impulsformerschaltung IS enthalten, die über ein NOR-Glied NOR1 mit einer "0" den Transistor kurzzeitig leitend macht, um so den Knoten G voreinzustellen. Dies ist für den Fall nötig, wenn der Übertrag von CBQ kommt.

**Patentansprüche**

1. Paralleladdierwerk mit Übertrag zwischen benachbarten Addierstufen (ASO-AS3), wobei jede Addierstufe zwei Eingangsdatenanschlüsse (AE', BE') und eine Übertragbildungsschaltung (CT) mit einem Eingangsübertraganschluß (CE) und einem Ausgangsübertraganschluß (CA) aufweist, die aus von der Addierstufe zu addierenden Eingangsdatensignalen (AO, BO...A3, B3) und einem ihr zugeführten Eingangsübertragsignal ein Ausgangsübertragsignal erzeugt,

wobei die Übertragbildungsschaltung (CT) eine mit komplementären Transistoren (T1, T3, T7, T9) aufgebaute, zwischen die beiden Pole (+V, -V) einer Spannungsversorgungsquelle geschaltete Komplementärstufe (CS) aufweist, die einen mit dem Ausgangsübertraganschluß (CA) verbundenen Mittelknoten (K) aufweist, der während einer Rechenphase bei gleichem Binärwert der der Addierstufe zugeführten Eingangsdatensignale ein diesem Binärwert entsprechendes Potential aufweist,

wobei die Übertragbildungsschaltung (CT) außerdem eine Koppelschaltung (PKS; NKS) aufweist, die einen Endes mit einem Pol (+V, -V) der Spannungsversorgungsquelle verbunden ist und deren anderes Ende (M1; M2) bei ungleichen Binärwerten der Eingangssignaldaten das Potential des einen Pols (+V, -V) aufweist,

wobei die Übertragbildungsschaltung (CT) ferner einen Schalttransistor (T5; T6) aufweist, dessen Hauptstrecke zwischen den Mittelknoten (K) und das andere Ende (M1; M2) der Koppelschaltung (PKS; NKS) geschaltet ist und dessen Steuerelektrode mit dem Eingangsübertragsignal beaufschlagt wird,

und wobei eine Voreinstelleinrichtung (VSA, VSB) vorgesehen ist, welche während einer Voreinstellphase die Addierstufe vor deren jeweiligem Rechenzyklus in einen keinen Ausgangsübertrag darstellenden Voreinstellzustand bringt.

2. Paralleladdierwerk nach Anspruch 1, dadurch gekennzeichnet, daß die Addierstufen (ASO-AS3) in CMOS-Technik aufgebaut sind.

3. Paralleladdierwerk nach Anspruch 2, dadurch gekennzeichnet, daß das eine Ende der Koppelschaltung (PKS) mit einem positiven Pol (+V) der Spannungsversorgungsquelle verbunden ist und daß die Transistoren der Koppelschaltung (PKS) und der Schalttransistor (T6) P-Kanal-Transistoren sind.

4. Paralleladdierwerk nach Anspruch 2, dadurch gekennzeichnet, daß das eine Ende der Koppelschaltung (NKS) mit einem negativen Pol (-V) der Spannungsversorgungsquelle verbunden ist und die Transistoren der Koppelschaltung (NKS) und der Schalttransistor (T5) N-Kanal-Transistoren sind.

5. Paralleladdierwerk nach Anspruch 3 oder 4, dadurch gekennzeichnet, daß dann, wenn Addierstufen gemäß Anspruch 3 oder Addierstufen gemäß Anspruch 4 aufeinanderfolgen, der Eingangsübertraganschluß (CE) der je nachfolgenden Addierstufe mit dem Ausgangsübertraganschluß (CA) der je vorausgehenden Addierstufe über eine Invertereinrichtung verbunden ist.

6. Paralleladdierwerk nach Anspruch 3 und 4, dadurch gekennzeichnet, daß in dem Paralleladdierwerk abwechselnd Addierstufen gemäß Anspruch 3 und Addierstufen gemäß Anspruch 4 aufeinanderfolgen.

7. Paralleladdierwerk nach mindestens einem der Ansprüche 2 bis 6, dadurch gekennzeichnet,

- daß eine Komplementärstufe (CS) eine mit dem positiven Pol (+V) verbundene Reihenschaltung mit zwei P-Kanal-Transistoren (T7, T9) und eine mit dem negativen Pol (V) verbundene Reihenschaltung mit zwei N-Kanal-Transistoren (T1, T3) aufweist,

- daß der Mittelknoten (K) durch den Verbindungspunkt zwischen diesen beiden Reihenschaltungen gebildet ist und

- daß bei jeder Reihenschaltung die Steuerelektrode des einen Transistors (T7, T3) mit dem einen Eingangsdatenanschluß (AE') und die Steuerelektrode des anderen Transistors (T9, T1) mit dem anderen Eingangsdatenanschluß (BE') gekoppelt ist.

8. Paralleladdierwerk nach mindestens einem der Ansprüche 2 bis 7,
dadurch gekennzeichnet , daß
die Koppelschaltung (PKS; NKS) eine Parallelschaltung zweier Transistoren (T2, T4; T8, T10) aufweist, deren Steuerelektroden mit dem einen bzw. dem anderen Eingangsdatenanschluß (AE', BE') gekoppelt sind.

9. Paralleladdierwerk nach mindestens einem der Ansprüche 2 bis 8, dadurch gekennzeichnet, daß der Schalttransistor (T5; T6) durch einen MOS-Transistor gebildet ist, dessen Sourceelektrode mit dem anderen Ende (MI; M2) der Koppelschaltung (PKS; NKS), dessen Drainelektrode mit dem Mittelknoten (K) und dessen Gateelektrode mit dem Eingangsübertraganschluß (CE) gekoppelt ist.

10. Paralleladdierwerk nach mindestens einem der Ansprüche 1 bis 9, dadurch gekennzeichnet, daß die Voreinstelleinrichtung (VSA, VSB) eine Voreinstellsignalquelleneinrichtung (VA) und eine von dieser gesteuerte Voreinstellschaltung (T28, T29, T30; T25, T26, T27) aufweist, die in der Rechenphase der Addierstufe das Eingangsdatensignal (AE', BE') für die Addierstufe wirksam werden läßt und in der Voreinstellphase die Addierstufe im Voreinstellzustand hält.

11. Paralleladdierwerk nach mindestens einem der Ansprüche 1 bis 10, dadurch gekennzeichnet, daß die Addierstufen in zwei Gruppen (ASO, AS1 und AS2, AS3) unterteilt sind und daß die beiden Gruppen je abwechselnd in einer Voreinstellphase und in einer Rechenphase betrieben werden, wobei sich jeweils die eine Gruppe in der Rechenphase befindet, während die jeweils andere Gruppe in der Voreinstellphase gehalten wird.

**12.** Paralleladdierwerk nach Anspruch 11, dadurch gekennzeichnet, daß bei aufeinanderfolgenden Addierstufen, die zu unterschiedlichen Gruppen gehören, der Ausgangsübertraganschluß (CA) der vorausgehenden Addierstufe mit dem Eingangsübertraganschluß (CE) der nachfolgenden Addierstufe über eine Zwischenspeichereinrichtung (ZS) gekoppelt ist, die den von der vorausgehenden Addierstufe berechneten Übertrag während des Phasenwechsels für die in die Rechenphase eintretende nachfolgende Addierstufe zwischenspeichert.

**13.** Paralleladdierwerk nach Anspruch 12, dadurch gekennzeichnet, daß die Zwischenspeichereinrichtung (ZS) ihren Übertragausgang (CA), bevor das berechnete Ausgangsübertragsignal der vorhergehenden Addierstufe vorliegt, in einen, keinen Ausgangsübertrag darstellenden, Voreinstellzustand bringt und nach Vorliegen des Ausgangsübertragsignals dieses bis zur nächsten Vorbereitungsphase der Zwischenspeichereinrichtung speichert.

**14.** Paralleladdierwerk nach Anspruch 13, dadurch gekennzeichnet,

- daß die Zwischenspeichereinrichtung (ZS) eine Reihenschaltung mit einem P-Kanal-Transistor (T40) und zwei N-Kanal-Transistoren (T41, T42) aufweist, deren mit dem positiven Pol (+V) verbundener P-Kanal-Transistor (T40) und deren mit dem negativen Pol (-V) verbundener N-Kanal-Transistor (T42) gemeinsam vom Ausgang einer Impulsformerschaltung (IF), die eingangsseitig mit einer Voreinstellsignalquelleneinrichtung verbunden ist, angesteuert werden,

- daß die Steuerelektrode des durch einen der N-Kanal-Transistoren gebildeten mittleren Transistors (T41) einerseits mit dem Ausgang eines über eine Inverterstufe (I7) vom Ausgang der Impulsformerschaltung (IF) angesteuerten N-Kanal-Transistors (T39) und andererseits über den Ausgang (Y) einer Inverterstufe (I8) mit der Summierschaltung (ST) der vorausgehenden Addierstufe und einer Hauptelektrode eines P-Kanal-Transistors (T43) verbunden ist, dessen zweite Hauptelektrode mit dem Pluspol (+V) der Spannungsversorgung verbunden ist, und

- daß der mit dem Ausgangsübertraganschluß der vorausgehenden Addierstufe verbundene Eingangsübertraganschluß (CE) mit der Steuerelektrode des Schalttransistors (T43) verbunden ist und der Ausgangsübertraganschluß (CA) der Zwischenspeichereinrichtung zusammen mit der Verbindung zwischen dem P-Kanal-Transistor (T40) und dem mittleren N-Kanal-Transistor (T41) der Reihenschaltung einen Schaltungsknoten (R) bildet.

**15.** Paralleladdierwerk nach mindestens einem der Ansprüche 1 bis 14, dadurch gekennzeichnet, daß der Eingangsübertraganschluß (CE) und der Ausgangsübertraganschluß (CA) einer Addierstufe je über eine Lastpuffereinrichtung (I3, I4; I5, I6) mit der Summiereinrichtung (ST) dieser Addierstufe gekoppelt sind.

**16.** Paralleladdierwerk nach Anspruch 15, dadurch gekennzeichnet, daß die dem Eingangsübertraganschluß (CE) einer Addierstufe zugeordnete Lastpuffereinrichtung (I3, I4) gleichzeitig die dem Ausgangsübertraganschluß (CA) der vorausgehenden Addierstufe zugeordnete Lastpuffereinrichtung (I5, I6) bildet.

**17.** Paralleladdierwerk nach mindestens einem der Ansprüche 1 bis 16, dadurch gekennzeichnet,

- daß das von der höchstwertigen Addierstufe (AS3) berechnete und an ihrem Ausgangsübertraganschluß (CA) anliegende Ausgangsübertragsignal mittels einer Übertragrückführschaltung (CS2) dem Eingangsübertraganschluß (CE) der niedrigstwertigen Addierstufe (AS0) zur Verfügung gestellt wird,

- daß die Übertragrückführschaltung (CS2), bevor das berechnete Ausgangsübertragsignal der höchstwertigen Addierstufe vorliegt, ihren Ausgang (CBQ) in einen keinen Ausgangsübertrag darstellenden Voreinstellzustand bringt,

- und daß eine Übertragauswahlschaltung (CS1) vorgesehen ist, die dazu dient, auszuwählen, ob der von der höchstwertigen Addierstufe berechnete Übertrag, ein Übertragmerkersignal oder eine konstante binäre "1" bzw. "0" dem Eingangsübertraganschluß der niedrigstwertigen Addierstufe (AS0) des Paralleladdierwerks zugeführt werden soll.

**18.** Paralleladdierwerk nach Anspruch 17, dadurch gekennzeichnet,

- daß die Übertragrückführschaltung (CS2) eine erste Reihenschaltung mit einem ersten N-Kanal-Transistor (T33), einem ersten P-Kanal-Transistor (T31) und einem zweiten P-Kanal-Transistor (T32) aufweist, deren mit dem negativen Pol (-V) verbundener erster N-Kanal-Transistor (T33) und deren mit dem positiven Pol (+V) verbundener erster P-Kanal-Transistor (T31) gemeinsam von einer Voreinstellsignalquelle angesteuert werden,

- daß der Steuerelektrode (CE) des zwischen dem ersten P-Kanal-Transistor (T31) und dem ersten N-Kanal-Transistor (T33) liegenden zweiten P-Kanal-Transistors (T32) das Ausgangsübertragsignal der höchstwertigen Addierstufe zugeführt wird,

- daß eine zweite Reihenschaltung eines dritten P-Kanal-Transistors (T34) und eines zweiten N-Kanal-Transistors (T35) so zwischen dem positiven Pol (+V) und dem negativen Pol (-V) der Spannungsversorgungsquelle geschaltet ist, daß die eine Hauptelektrode des dritten P-Kanal-Transistors (T34) mit dem positiven Pol (+V) verbunden ist und seine zweite Hauptelektrode mit der einen Hauptelektrode des zweiten N-Kanal-Transistors (T35) und dem Ausgang (CBQ) der Übertragrückführschaltung (CS2) den Schaltungsknoten (S) bildet,

- daß die Steuerelektrode des dritten P-Kanal-Transistors (T34) über einen ersten Inverter (I9) mit der Steuerelektrode des ersten P-Kanal-Transistors (T31) verbunden ist,

- daß der von je einer Hauptelektrode des zweiten P-Kanal-Transistors (T32) und des ersten N-Kanal-Transistors (T33) mit der Steuerelektrode des zweiten N-Kanal-Transistors (T35) gebildete Schaltungsknoten (T) durch einen zweiten Inverter (I10) über den Ausgang (X) mit der Summierschaltung (ST) der höchstwertigen Addierstufe verbunden ist,

- daß die Übertragauswahlschaltung (CS1) eine dritte Reihenschaltung eines am positiven Pol (+V) angeschlossenen vierten P-Kanal-Transistors (T36) und eines mit dem negativen Pol (-V) verbundenen dritten N-Kanal-Transistors (T38) aufweist, mit deren Verbindungspunkt (G) die eine Hauptelektrode des das Ausgangsübertragsignal der höchstwertigen Addierstufe zuführenden vierten N-Kanal-Transistors (T37) verbunden ist, und

- daß die Übertragauswahlschaltung (CS1) eine Auswahllogik (AW) aufweist, die die ihren Eingängen (ST1, ST2, ST3) zugeführten Steuersignale sowie das Übertragmerkersignal und das Voreinstellsignal so auswertet und den vierten P-Kanal-Transistor (T36) oder den vierten oder dritten N-Kanal-Transistor (T37, T38) der Übertragauswahlschaltung (CS1) über die Auswahllogiksignale (a, b, c) so auswählt, daß je nach Auftreten der Steuersignale entweder das von der Übertragrückführschaltung (CS2) zugeführte Ausgangsübertragsignal (CBQ) über den vierten N-Kanal-Transistor (T37) an den Übertragausgang (CA) der Übertragauswahlschaltung (CS1) gelangt oder der vierte P-Kanal-Transistor (T36) und der dritte N-Kanal-Transistor (T38) so angesteuert werden, daß sie eine konstante binäre "0" bzw. "1" oder das Übertragmerkersignal an den Übertragausgang (CA) legen, wobei eine Impulsformerschaltung (IS), deren Eingang (VA) das Voreinstellsignal zugeführt wird, über ein an ihrem Ausgang (PC) angeschlossenes NOR-Glied (NOR1) den vierten P-Kanal-Transistor (T36) so ansteuert, daß er kurzzeitig leitend und der Verbindungspunkt (G) voreingestellt wird.

## Claims

1.  Parallel adder with carry between adjacent adding stages (ASO-AS3) each of which has two data input terminals (AE', BE') and comprises a carry-generating circuit (CT) having a carry input terminal (CE) and a carry output terminal (CA), said carry-generating circuit generating a carry output signal from carry input signals (AO, BO.....A3, B3) to be added by the adding stage and a carry input signal applied to it,

    the carry-generating circuit (CT) including a complementary stage (CS) which is built with complementary transistors (T1, T3, T7, T9), is connected between the two terminals (+V, -V) of a supply-voltage source, and has a center node (K) which is connected to the carry output terminal (CA) and which during a computing phase, if the data input signals applied to the adding stage have the same binary state value, is at a potential corresponding to said binary state value,

    the carry-generating circuit (CT) further including a coupling circuit (PKS, NKS) one end of which is connected to one terminal (+V, -V) of the supply-voltage source, and the other end (M1, M2) of which is at the potential of said one terminal (+V, -V) if the data input signals have unequal binary state values;

    the carry-generating circuit (CT) further including a switching transistor (T5; T6) whose main path is connected between the center node (K) and the other end (M1; M2) of the coupling circuit (PKS; NKS) and whose control electrode is supplied with the carry input signal, and

each adding stage further comprising a presetting device (VSA, VSB) whereby the adding stage, prior to its respective computing cycle, is placed in a preset state representing no carry output.

2. A parallel adder as claimed in claim 1, characterized in that the adding stages (ASO-AS3) are realized using CMOS technology.

3. A parallel adder as claimed in claim 2, characterized in that said one end of the coupling circuit (PKS) is connected to a positive terminal (+V) of the supply-voltage source, and that the transistors of the coupling circuit (PKS) and the switching transistor (T6) are P-channel transistors.

4. A parallel adder as claimed in claim 2, characterized in that said one end of the coupling circuit (NKS) is connected to a negative terminal (-V) of the supply-voltage source, and that the transistors of the coupling circuit (NKS) and the switching transistor (T5) are N-channel transistors.

5. A parallel adder as claimed in claim 3 or 4, characterized in that, if adding stages as claimed in claim 3 or adding stages as claimed in claim 4 succeed one another, the carry input terminal (CE) of the respective following adding stage is connected to the carry output terminal (CA) of the respective preceding adding stage via an inverter device.

6. A parallel adder as claimed in claims 3 and 4, characterized in that adding stages as claimed in claim 3 and adding stages as claimed in claim 4 alternately succeed one another in the parallel adder.

7. A parallel adder as claimed in at least one of claims 2 to 6, characterized in

   - that a complementary stage (CS) comprises a series combination of two P-channel tansistors (T7, T9), which is connected to the positive terminal (+V), and a series combination of two N-channel transistors (T1, T3), which is connected to the negative terminal (-V),

   - that the center node (K) is formed by the junction point of said two series combinations, and

   - that in each series combination, the control electrode of one transistor (T7, T3) is coupled to one (AE') of the data input terminals (AE', BE') and the control electrode of the other transistor (T9, T1) is coupled to the other data input terminal (BE').

8. A parallel adder as claimed in at least one of claims 2 to 7, characterized in that the coupling circuit (PKS; NKS) comprises a parallel combination of two transistors (T8, T10; T4, T2) whose control electrodes are respectively coupled to one and the other of the data input terminals (AE', BE').

9. A parallel adder as claimed in at least one of claims 2 to 8, characterized in that the switching transistor (T6; T5) is an MOS transistor whose source and drain electrodes are coupled to said other end (M1; M2) of the coupling circuit (PKS; NKS) and to the center node (K), respectively, and whose gate electrode is coupled to the carry input terminal (CE).

10. A parallel adder as claimed in at least one of claims 1 to 9, characterized in that the presetting device (VSA, VSB) comprises a presetting-signal source (VA) and a presetting circuit (T28, T29, T30; T25, T26, T27) which is controlled by said presetting-signal source (VA), and which causes the data input signal (AE', BE') to become effective for the adding stage in the computing phase of the adding stage and holds the adding stage in the preset state in the presetting phase.

11. A parallel adder as claimed in at least one of claims 1 to 10, characterized in that the adding stages are divided into two groups (AS0, AS1 and AS2, AS3), and that the two groups are alternately operated in a presetting phase and a computing phase, with one of the groups being in the computing phase while the respective other group is held in the presetting phase.

12. A parallel adder as claimed in claim 11, characterized in that in the case of successive adding stages belonging to different groups, the carry output terminal (CA) of the preceding adding stage is coupled to the carry input terminal (CE) of the following adding stage via a buffer device (ZS) which temporarily stores the carry from the preceding adding stage during the phase change for the following adding stage entering into the computing phase.

13. A parallel adder as claimed in claim 12, characterized in that before receiving the carry output signal from the preceding adding stage, the buffer device (ZS) places its carry output (CA) in a preset state representing no carry, and that after receipt of the carry output signal, the buffer device (ZS) stores the latter until the next preparation phase of the buffer.

14. A parallel adder as claimed in claim 13, characterized in

   - that the buffer device (ZS) comprises a series combination of a P-channel transistor (T40) and two N-channel transistors (T41, T42) wherein the P-channel transistor (T40), which is connected to the positive terminal (+V), and the N-channel transistor (T42) connected to the negative terminal (-V) are driven jointly by the output of a pulse shaper (IF) having its input connected to a presetting-signal source,

- that the control electrode of the middle transistor (T41), which is formed by one of the N-channel transistors, is connected, on the one hand, to the output of an N-channel transistor (T39) driven by the output of the pulse shaper (IF) via an inverter stage (I7) and, on the other hand, to the summing circuit (ST) of the preceding adding stage via the output (Y) of an inverter stage (I8) and to one main electrode of a P-channel switching transistor (T43) having its second main electrode connected to the positive terminal (+V) of the supply-voltage source, and

- that the carry input terminal (CE), which is connected to the carry output terminal of the preceding adding stage, is coupled to the control electrode of the switching transistor, while the carry output terminal (CA) of the buffer device and the connection between the P-channel transistor (T40) and the middle transistor (T41) of the series combination form a node (R).

15. A parallel adder as claimed in at least one of claims 1 to 14, characterized in that the carry input terminal (CE) and the carry output terminal (CA) of each adding stage are coupled to the summing circuit (ST) of said adding stage via one load buffer device (I3, I4; I5, I6) each.

16. A parallel adder as claimed in claim 15, characterized in that the load buffer device (I3, I4) associated with the carry input terminal (CE) of the respective adding stage also forms the load buffer device (I3, I4) associated with the carry output terminal (CA) of the preceding adding stage.

17. A parallel adder as claimed in at least one of claims 1 to 16, characterized in

- that the carry output signal generated by the highest-order adding stage (AS3) and appearing at its carry output terminal (CA) is made available to the carry input terminal (CE) of the lowest-order adding stage (ASO) by means of a carry feedback circuit (CS2),

- that, prior to receiving the carry output signal from the highest-order adding stage, the carry feedback circuit (CS2) places its output (CBQ) in a preset state representing no carry, and

- that a carry selection circuit (CS1) is provided which serves to select whether the carry calculated by the highest-order adding stage, a carry flag signal, or a constant binary "1" or "0" is to be applied to the carry input terminal of the lowest-order adding stage (ASO) of the parallel adder.

18. A parallel adder as claimed in claim 17, characterized in

- that the carry feedback circuit (CS2) comprises a first series combination of a first N-channel transistor (T33), a first P-channel transistor (T31), and a second P-channel transistor (T32) wherein the first N-channel transistor (T33), which is connected to the negative terminal (-V), and the first P-channel transistor (T31), which is connected to the positive terminal (+V), are driven jointly by a presetting-signal source,

- that the control electrode (CE) of the second P-channel transistor (T32), which is located between the first P-channel transistor (T31) and the first N-channel transistor (T33), is supplied with the carry output from the highest-order adding stage,

- that a second series combination of a third P-channel transistor (T34) and a second N-channel transistor (T35) is inserted between the positive terminal (+V) and the negative terminal (-V) of the supply-voltage source, with one main electrode of the third P-channel transistor (T34) connected to the positive terminal (+V), and the second main electrode of the third P-channel transistor (T34), one main electrode of the second N-channel transistor (T35), and the output (CBQ) of the carry feedback circuit (CS2) forming the node (S),

- that the control electrode of the third P-channel transistor (T34) is connected via a first inverter (I9) to the control electrode of the first P-channel transistor (T31),

- that the node (T) formed by one main electode of the second P-channel transistor (T32), one main electrode of the first N-channel transistor (T33), and the control electrode of the second N-channel transistor (T35) is connected via a second inverter (I10) and the output (X) to the summing circuit (ST) of the highest-order adding stage,

- that the carry selection circuit (CS1) comprises a third series combination of a fourth P-channel transistor (T36) connected to the positive terminal (+V) and a third N-channel transistor (T38) connected to the negative terminal (-V), the junction point (G) of the fourth P-channel transistor (T36) and the third N-channel transistor (T38) being connected to one main electrode of a fourth N-channel transistor (T37), which applies the carry output signal to the highest-order adding stage, and

- that the carry selection circuit (CS1) includes a selection logic (AW) which evaluates the control signals applied to its inputs (ST1, sT2, ST3), the carry flag signal, and the presetting signal and selects the fourth P-channel transistor (T36) or the fourth or third N-channel transistor (T37, T38) of the carry selection circuit (CS1) via selection logic signals (a, b, c) in such a way that, depending on the occurrence of the control signals, either the carry output signal (CBQ) applied from the carry feedback circuit (CS2) is transferred through the fourth N-channel transistor (T37) to the carry output (CA) of the carry selection circuit (CS1) or the fourth P-channel transistor (T36) and the third N-channel transistor (T38) are driven so as to transfer a constant binary "0" or "1" or the carry flag signal to the carry output (CA), a pulse shaper (IS) receiving the presetting signal at its input (VA) and driving the fourth P-channel transistor (T36) via a NOR gate (NOR1) connected to its output (PC) in such a way that the fourth P-channel transistor is rendered conductive for a short time and the junction point (G) is preset.

**Revendications**

1. Additionneur parallèle avec report entre des étages additionneurs voisins (AS0-AS3), chaque étage additionneur comportant deux bornes de données d'entrée (AE',BE') et un circuit de formation de report (CT) comportant une borne de report d'entrée (CE) et une borne de report de sortie (CA), qui produit un signal de report de sortie à partir des signaux de données d'entrée (A0,B0...A3,B3) devant être additionnés par l'étage additionneur, et un signal de report d'entrée envoyé à ce circuit,

dans lequel le circuit de formation de report (CT) possède un étage complémentaire (CS) constitué par des transistors complémentaires (T1,T3,T7,T9) entre les deux pôles (+V,-V) d'une source d'alimentation en tension, et qui comporte un noeud médian (K) relié à la borne de report de sortie (CA) et qui, pendant une phase de régulation possède, pour la même valeur binaire des signaux de données d'entrée envoyés à l'étage additionneur, un potentiel correspondant à cette valeur binaire, et

dans lequel le circuit de formation de report (CT) possède en outre un circuit de couplage (PKS;NKS), qui relie une extrémité à un pôle (+V,-V) de la source de tension d'alimentation et dont l'autre extrémité (M1;M2) possède le potentiel de ce pôle (+V,-V) dans le cas de valeurs binaires différentes des données du signal d'entrée, et

dans lequel le circuit de formation de report (C') possède en outre un transistor de commutation (T5;T6), dont la section principale est branchée entre le noeud médian (K) et l'autre extrémité (M1;M2) du circuit de couplage (PKS;MKS) et dont l'électrode de commande est chargée par le signal de report d'entrée, et

dans lequel il est prévu un dispositif de préréglage (VSA,VSB), qui pendant une phase de préréglage, place l'étage additionneur, avant son cycle respectif de calcul, dans un état préréglé ne présentant aucun report de sortie.

2. Additionneur parallèle selon la revendication 1, caractérisé en ce que les étages additionneurs (S0-S3) sont constitués selon la technique CMOS.

3. Additionneur parallèle selon la revendication 2, caractérisé en ce qu'une extrémité du circuit de couplage (PKS) est reliée à un pôle positif (+V) de la source d'alimentation en tension et que les transistors du circuit de couplage (PKS) et le transistor de commutation (T6) sont des transistors à canal P.

4. Additionneur parallèle selon la revendication 2, caractérisé en ce qu'une extrémité du circuit de couplage (NKS) est reliée à un pôle négatif (-V) de la source de tension d'alimentation et que les transistors du circuit de couplage (NKS) et le transistor de commutation (T5) sont des transistors à canal N.

5. Additionneur parallèle selon la revendication 3 ou 4, caractérisé en ce que, lorsque des étages additionneurs selon la revendication 3 ou des étages additionneurs selon la revendication 4 se succèdent, la borne de report d'entrée (CE) de chaque étage additionneur suivant est reliée à la borne de report de sortie (CA) de l'étage additionneur respectivement précédent, par l'intermédiaire d'un circuit inverseur.

6. Additionneur parallèle selon les revendications 3 et 4, caractérisé en ce que dans l'additionneur parallèle, des étages additionneurs selon la revendication 3 et des étages additionneurs selon la revendication 4 se succèdent alternativement.

7. Additionneur parallèle selon au moins l'une des revendications 2 à 6, caractérisé en ce

- qu'un étage complémentaire (CS) possède un circuit série relié au pôle positif (+V) et comportant deux transistors (T7,T9) à canal P et un circuit série, relié au pôle négatif (-V) comportant deux transistors (T1,T3) à canal N,
- que le noeud médian (K) est formé par le point de jonction de ces deux circuits série, et
- que dans chaque circuit série, l'électrode de commande d'un transistor (T7,T3) est couplée à une borne de données d'entrée (AE'), et l'électrode de commande de l'autre transistor (T9,T1) est couplée à l'autre borne de données d'entrée (BE').

8. Additionneur parallèle selon au moins l'une des revendications 2 à 7, caractérisé en ce que le circuit de couplage (PKS;NKS) possède un circuit parallèle de deux transistors (T2,T4;T8,T10), dont les électrodes de commande sont couplées à l'une ou à l'autre des bornes de données d'entrée (AE',BE').

9. Additionneur parallèle selon au moins l'une des revendications 2 à 8, caractérisé en ce que le transistor de commutation (T5;T6) est formé par un transistor MOS, dont l'électrode de source est couplée à l'autre extrémité (M1;M2) du circuit de couplage (PKS;NKS), dont l'électrode de drain est couplée au noeud médian (K) et dont l'électrode de grille est couplée à la borne de report d'entrée (CE).

10. Additionneur parallèle selon au moins l'une des revendications 1 à 9, caractérisé en ce que le dispositif de préréglage (VSA,VSB) possède un dispositif (VA) formant source de signaux de préréglage, et un circuit de préréglage (T28,T29,T30; T25,T26,T27) commandé par ce dispositif formant source de signaux de préréglage et qui, pendant la phase de calcul de l'étage additionneur, peut activer le signal de données d'entrée (AE',BE') pour l'étage additionneur et, pendant la phase de préréglage, maintient l'étage additionneur dans l'état préréglé.

11. Additionneur parallèle selon au moins l'une des revendications 1 à 10, caractérisé en ce que les étages additionneurs sont répartis en deux groupes (AS0,AS1 et AS2,AS3) et que les deux groupes fonctionnent alternativement dans une phase de préréglage et dans une phase de calcul, un groupe étant situé respectivement dans la phase de calcul tandis que l'autre groupe est maintenu respectivement dans la phase de préréglage.

12. Additionneur parallèle selon la revendication 11, caractérisé en ce que dans le cas d'étages additionneurs successifs, qui font partie de groupes différents, la borne de report de sortie (CA) de l'étage additionneur précédent est couplée à la borne de report d'entrée (CE) de l'étage additionneur suivant au moyen d'un dispositif de mémoire intermédiaire (ZS), qui mémorise temporairement le report, calculé par l'étage additionneur précédent, pendant l'alternance de phase pour l'étage additionneur suivant, qui entre dans la phase de calcul.

13. Additionneur parallèle selon la revendication 12, caractérisé en ce qu'avant que le signal de report de sortie calculé de l'étage additionneur précédent soit présent, le dispositif de mémorisation intermédiaire (ZS) passe dans un état préréglé, qui ne représente pas un report de sortie, et, une fois qu'est présent le signal de report de sortie, mémorise ce signal jusqu'à la phase de préparation suivante du dispositif de mémorisation intermédiaire.

14. Additionneur parallèle selon la revendication 13, caractérisé en ce

- que le dispositif de mémorisation intermédiaire (ZS) possède un circuit de calcul comportant un transistor à canal P (T40) et deux transistors à canal N (T41,T42), dont le transistor à canal P (T40), qui est relié au pôle positif (+V), et le transistor à canal N (T42), qui est relié au pôle négatif (-V) sont commandés en commun par la sortie d'un circuit de formation d'impulsions (IF), qui est relié, côté entrée, à un dispositif formant source de signaux de préréglage,
- que l'électrode de commande du transistor médian (T41) formée par l'un des transistors à canal N, est reliée d'une part à la sortie d'un transistor à canal N (T39), commandé par la sortie du circuit de formation d'impulsions (IF) par l'intermédiaire d'un étage inverseur (I7), et d'autre part par l'intermédiaire de la sortie (Y) d'un étage inverseur (I8) au circuit de sommation (ST) de l'étage additionneur précédent, et à une électrode principale d'un transistor à canal P (T43), dont la seconde électrode principale est reliée au pôle positif (+V) de l'alimentation en tension, et
- que la borne de report d'entrée (CE), qui est reliée à la borne de report de sortie de l'étage additionneur précédent, est reliée à l'électrode de commande du transistor de commutation (T43) et que la borne de report de sortie (CA) du dispositif de mémorisation intermédiaire forme, conjointement avec la liaison entre le transistor à canal P (T40) et le transistor médian à canal N (T41) du circuit série, un noeud (R) du circuit.

15. Additionneur parallèle selon au moins l'une des revendications 1 à 14, caractérisé en ce que la borne de report d'entrée (CE) et la borne de report de sortie (CA) d'un étage additionneur sont couplées, respectivement par l'intermédiaire d'un dispositif tampon de charge (I3,I4; I5,I6) au dispositif de sommation (ST) de cet étage additionneur.

16. Additionneur parallèle selon la revendication 15, caractérisé en ce que le dispositif tampon de charge (I3,I4), qui est associé à la borne de report d'entrée (CE) d'un étage additionneur, forme simultanément le dispositif tampon de charge (I5,I6) associé à la borne de report de sortie (CA) de l'étage additionneur précédent.

17. Additionneur parallèle selon au moins l'une des revendications 1 à 16, caractérisé en ce

- que le signal de report de sortie, qui est calculé par l'étage additionneur de poids le plus élevé (AS3) et est appliqué à la borne de report de sortie (CA) de cet étage additionneur, est délivré, au moyen d'un circuit de renvoi de report (CS2), à la borne de report d'entrée (CE) de l'étage additionneur de poids le plus faible (AS0),
- que, avant que le signal de report de sortie calculé de l'étage additionneur de poids maximum soit présent, le circuit de renvoi de report (CS2) place sa sortie (CBQ) dans un état préréglé qui ne représente pas un report de sortie, et qu'il est prévu un circuit de sélection de report (CS1), qui sert à déterminer si le report, qui est calculé par l'étage additionneur de poids maximum, un signal indicateur de report ou un "1" ou un "0" binaire constant doit être envoyé à la borne de report d'entrée de l'étage additionneur de poids minimum (AS0) de l'additionneur parallèle.

18. Additionneur parallèle selon la revendication 17, caractérisé en ce

- que le circuit de renvoi de report (CS2) possède un premier circuit série comprenant un premier transistor à canal N (T30), un premier transistor à canal P (T31) et un second transistor à canal P (T32), parmi lesquels le premier transistor à canal N (T33), qui est relié au pôle négatif (-V), et le premier transistor à canal P (T31), qui est relié au pôle positif (+V), sont commandés en commun par une source de signaux de préréglage,
- qu'à l'électrode de commande (CE) du second transistor à canal P (T32), qui est située entre le premier transistor à canal P (T31) et le premier transistor à canal N (T33), est envoyé le signal de report de sortie de l'étage additionneur de poids maximum,
- qu'un second circuit série formé d'un troisième transistor à canal P (T34) et d'un second transistor à canal N (T35) est branché entre le pôle positif (+V) et le pôle négatif (-V) de la source de tension d'alimentation de telle sorte qu'une électrode principale du troisième transistor à canal P (T34) est reliée au pôle positif (+V) et que sa seconde électrode forme, avec une électrode principale du second transistor à canal N (T35) et avec la sortie (CBQ) du circuit de renvoi de report (CS2), le noeud (S) du circuit,

- que l'électrode de commande du troisième transistor à canal P (T34) est reliée, par l'intermédiaire d'un premier inverseur (I9), à l'électrode de commande du premier transistor à canal P (T31),
- que le noeud (T) du circuit, qui est formé respectivement par une électrode principale du second transistor à canal P (T32) et du premier transistor à canal N (T33) avec l'électrode de commande du second transistor à canal N (T35), est relié par un second inverseur (I10), par l'intermédiaire de la sortie (X), au circuit de sommation (ST) de l'étage additionneur de poids maximum,
- que le circuit de sélection de report (CS1) possède un troisième circuit série formé d'un quatrième transistor à canal P (T36), connecté au pôle positif (+V), et d'un troisième transistor à canal N (T38), connecté au pôle négatif (-V), au point de jonction (G) desquels est reliée une électrode principale du quatrième transistor à canal N (T37), qui délivre le signal de report de sortie à l'étage additionneur de poids maximum, et
- que le circuit de sélection de report (CS1) possède une logique de sélection (AW), qui évalue les signaux de commande, qui sont envoyés à ces entrées (ST1,ST2,ST3), ainsi que le signal indicateur du report et un signal de préréglage et sélectionne le quatrième transistor à canal P (T36) ou le quatrième ou le troisième transistor à canal N (T37,T38) du circuit de sélection de report (CS1), par l'intermédiaire des signaux (a, b,c) de la logique de sélection, de telle sorte qu'en fonction de l'apparition des signaux de commande, soit le signal de report de sortie (CBQ) envoyé par le circuit de report (CS2) parvient, par l'intermédiaire du quatrième transistor à canal N (T37), à la sortie de report (CA) du circuit de sélection de report (CS1), soit le quatrième transistor à canal P (T36) et le troisième transistor à canal N (T38) sont commandés de telle sorte qu'ils appliquent un "0" ou un "1" binaire constant ou le signal indicateur de report à la sortie de report (CA), un circuit de formation d'impulsions (IS), à l'entrée (V1) duquel est envoyé le signal de préréglage, commande le quatrième transistor à canal P (T36), par l'intermédiaire d'un circuit NON-OU (NOR1), qui est connecté à la sortie (PC) de ce circuit, de telle sorte que ce circuit devient conducteur pendant un bref intervalle de temps et que le point de jonction (G) est préréglé.

FIG.1

FIG.2

FIG.3

FIG.4

FIG.5

FIG.6

# FIG. 7A

# FIG. 7B

# FIG.8